# EUROPEAN PATENT APPLICATION

(11) **EP 2 163 690 A1**
(43) Date of publication of application: **17.03.2010**
(21) Application number: 09425342.4
(22) Date of filing: 09.09.2009
(51) Int. Cl.: E02B 3/26, E02B 3/24

(54) **Support and/or protection anchor log for the mooring of boats and load bearing structure using such a log**

(30) Priority: 10.09.2008 IT VI20080210
(71) Applicant: Besenzoni S.p.A., 24067 Sarnico (Bergamo) (IT)
(72) Inventor: Besenzoni, Giorgio, 24067 Sarnico (BG) (IT)
(74) Representative: Iannone, Carlo Luigi

(57) **Abstract**

A support and/or protection anchor log (1; 100; 200) for the mooring of boats including a reference rod (2; 101; 201), defining a longitudinal axis (Y), provided with a first section which is immersed into a fluid mass (A) and with a second section which emerges from the water surface (P) of the fluid mass (A), and a floating bumper body (3; 102; 202), externally associated with the reference rod (2; 101; 201) and adapted to deaden the blows of the boat while remaining itself on the water surface (P) of the fluid mass (a) constantly following the level of the fluid mass (A) itself.

## Description

The present invention relates to a support and/or protection anchor log for the mooring of boats, suitable, therefore, to allow the mooring of boats such as sports watercrafts.

The invention described herein also refers to a load bearing structure, such as one or more support beams known as *"bricole"* or "anchor logs" made of wood and having an end anchored to the depth of a lagoon, using said support and/or protection anchor log.

As known, the manoeuvres with which the various sports watercrafts such as boats, yachts, motorboats and the like, are parked at pier or quay, side-by-side to a generic load bearing structure or other similar means, are very critical and difficult.

The difficulty is mainly caused by the unstable nature of the surface, such as precisely the water, on which the watercrafts move and the speed direction with which those means of transport are moved in such occasions, almost always the reverse, to get an as much as possible proper and efficient placing.

It so happens that, despite the extreme care taken by drivers in manoeuvring, in their movement the means of transport concerned inevitably and accidentally collide against near bodies, with the obvious problems which this entails for the structural integrity of ones and the others.

Furthermore, in order to limit the aforesaid negative effects, the drivers of the means of transport perform slowly or are forced to repeat several times the manoeuvres, obviously lengthening the time required for their completion, however, completely avoiding collisions only in sporadic cases.

In the nautical field, the technical measures currently used to protect boats from accidental blows, when they are already moored or still in manoeuvring for the docking at the pier or quay of the port, are numerous and composites.

On one hand, a first protection is assured by special fender bodies of various kind and shape, mounted or in any case available to the user on boats, for example, inflatable or padded with spongy material envelopes, which are arranged protruding from the hull when the boats are already substantially moored.

On the other hand, the protection of boats, both during their docking at the port and already moored, from accidental blows is however entrusted to support structures, strange to the boats and belonging to the fixed facilities provided for mooring at the port, in proximity of the quay.

Among these structures, cylindrical beams are also included to which restraint means, such as lines or ropes or cables, are fixed, necessary to keep the boats in the predefined position at the port, against the wind or water action.

The present invention relates in particular to this kind of harbour support structures.

Each of the cylindrical beams is made of wood, concrete or metallic material, and is anchored to the depth of the sea from which protrudes for a section of length variable obviously with the tide changing.

In order to actually protect boats both in the course of the manoeuvres of approaching of the dock or wharf and when yet moored, in some solutions which can be today practically found every cylindrical beam is covered with a piece of cloth made of soft and elastically yielding material able to absorb and damp in some extent the possible blows against it suffered by the boats themselves.

The piece of cloth is wrapped, even in several layers, on the relative beam mainly around the section which remains protruding from the water surface.

Consequently, the rope, by means of which the boat is tied to the cylindrical beam during mooring, is wrapped directly onto the covering piece of cloth.

Over time, the subsequent winding and unwinding manoeuvres of the rope but mostly its continuous friction against the piece of cloth, due to the movement of the boat moored deriving in turn from the water wave-motion, markedly deteriorate the piece of cloth, jeopardizing the aesthetics till the point that it is inevitably necessary to replace it.

Other techniques nowadays used to protect boats from blows consist of applying externally to the beam, coaxial with it, a series of exhausted tires, fallen into disuse, stacked one on each other at the section which emerges from the water.

Although effective, this solution meets less and less the favour of the market since little appreciated from an aesthetical point of view.

Whatever the reason, the support structures acquired to the state of the art, arranged at a port for mooring boats but also for protecting them in case of accidental impact against the structures themselves, have the common drawback of not following in any way the course state of the tide of the water.

Consequently, the conditions of low tide periodically leave visible to the outside, without protection, the section of the cylindrical beam included between the water surface and the lower shock resistant element.

Considering that the length of such a section is often significant, the lower part of the hull of the boats is in such circumstances dangerously exposed to impacts against the area of the cylindrical beam lacking of protective elements, with the unavoidable and even serious risks of damage.

It is understandable, therefore, as the main drawback which can be discovered in the known art consists of the fact that the coated cylindrical beams are not always able to protect the boats from accidental collisions, but only under the conditions of normal or high tide.

A further drawback of the known technique at issue derives from the industriousness of the operations which must be performed to position the protection elements on the respective cylindrical beams.

The present invention aims to overcome the drawbacks of the known art just mentioned.

In particular, main purpose of the present invention is to provide a support and/or protection anchor log for the mooring of boats suitable to permanently protect boats from accidental impacts, in any sea conditions, and in any case to an extent greater than equivalent systems of the known type.

Within such a purpose, it is task of the invention to safeguard the structural integrity of boats at an extent greater than the known technique.

It is another task of the invention to limit compared to the known art the repair and/or replacement interventions of structural parts of boats damaged by accidental impacts against support structures during mooring or docking phase at a port.

It is a second purpose of the invention to achieve a support and/or protection anchor log for the mooring of boats which presents an aesthetic effect more pleasant and is able to keep it like that for a time period longer than the known art.

It is another purpose of the present invention to indicate a support and/or protection anchor log which, cooperating with the restraint means used for the mooring of boats, keeps unchanged its own structural integrity longer than similar known systems.

It is a last but not least purpose of the invention to allow to provided a fixed load bearing structure, already in place at any port and suitable for the mooring of boats, with protection means of the boats themselves from impacts more easily than the prior art.

These purposes are achieved by means of a support and/or protection anchor log for the mooring of boats as the appended claim 1, to which they refer for the sake of brevity.

Other features of detail of the support and/or protection anchor log of the invention are set forth in the corresponding dependent claims.

Advantageously, the anchor log of the invention, thanks to its floating bumper body, protects the boats, moored but also on the move at the wharf, which accidentally collide against the anchor log itself in any tide condition of the water.

In fact, the floating body, properly structured, always keeps the same position on the water surface, constantly following the course state and the periodic changes of water level, due, for example, to the effect of universal gravitation, leaving protruding from the surface of the liquid mass a constant portion, provided with bumper elements useful to the boats moored.

The function of the anchor log of the invention is, therefore, that traditional double one, allowing on one hand the support of the restraint means, such as cables or ropes, of the boats moored at the port and, on the other hand, the mitigation of any possible accidental impact against it suffered by the boats themselves.

Still advantageously, compared to the known technique the invention strongly reduces the negative effects, often rather disastrous, deriving from accidental blows suffered by boats against the mooring anchor log.

In advantageous manner, moreover, compared to the prior art this favours the reduction of costs due to repair, replacement and, more generally, maintenance of boats.

Equally advantageously, the anchor log of the current invention presents an aesthetic effect undoubtedly more pleasant than the known systems with equal function, especially even as a result of the continuous use, which well conjugates with the higher and higher value of the facilities installed in the most modern ports.

Furthermore, the anchor log of the invention improves the aesthetic effect of the load bearing structures already at place provided for the mooring of boats, anchored to the depth in the harbour area.

Indeed, according to a preferred embodiment of the invention, the anchor log includes an internally hollow reference rod which is fitted to a support beam, the classic longitudinal element made of material with high mechanical strength, immersed into water, visible at many seas, lakes and rivers ports.

In such an event, the anchor log of the invention covers at least the visible part of the support beam, usually made of wood, concrete or metallic material, improving the aesthetic impact thereof.

The coupling of the anchor log of the invention with the support beam forms also a load bearing structure, object of the present invention as well, which avoids or at least limits the risks of damage occurring when the boats, in mooring conditions, accidentally collide with the structure.

The aforesaid purposes and advantages, as well as others that will emerge below, will greatly result from the following description relating to a preferred embodiment of the invention, given by illustrative but not exhaustive way in relation to the attached drawings, where:
- figure 1 is a perspective view of the protection anchor log of the invention;
- figure 2 is the longitudinal section of figure 1;
- figure 3 is a perspective view of an executive variant of the anchor log of figure 1;
- figure 4 is a side view of figure 3;
- figure 5 is an enlarged glimpse of figure 3;
- figure 6 is the view of figure 4 according to the cutting plane A-A;
- figure 7 is the longitudinal section of a first enlarged constructive detail of figure 5;
- figures 8 and 9 are enlargements of two details of figure 7;
- figure 10 is the view of a first enlarged detail of figure 5;
- figure 11 is the view of figure 10 according to the cutting plane B-B;
- figure 12 is the plan view of a second enlarged detail of figure 5;
- figure 13 is the side view of a third enlarged detail of figure 5;
- figure 14 is a side view of another executive variant of the anchor log of the invention in schematic applicative conditions.

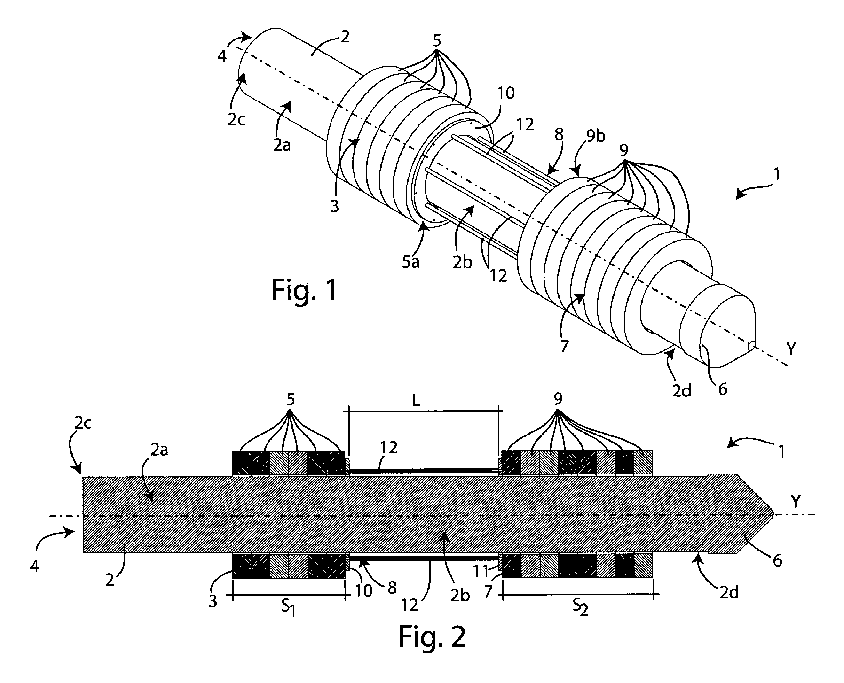

The protection anchor log for the mooring of boats is shown in a first embodiment in figure 1, where it is globally indicated with 1.

According to the invention, the protection anchor log 1 includes:
- a reference rod 2, defining a generally vertical longitudinal axis Y, provided with a first section 2a suited to be immersed into a fluid mass, such as sea water, and a second section 2b which emerges from the water surface of the fluid mass;
- a floating bumper body, as a whole numbered with 3, externally associated with the reference rod 2, suited to deaden the blows of the boat remaining on the water surface of the fluid mass constantly following the level of the fluid mass itself.

As explained later on, the reference rod 2 is advantageously internally hollow: it has at a first end 2c an inlet 4 which allows the introduction in the rod 2 itself of a support beam, not shown for the time being, anchored to the depth of the basin which receives the fluid mass, so that the reference rod 2 fits the support beam.

Incidentally, the support beam is commonly used to tie the rope of the boat.

For example, the support beam presents the usual substantially cylindrical shape and is made of any of the materials selected from the group consisting of wood, concrete, steel or other materials with high mechanical strength and suitable to the purpose.

For example, the reference rod 2 is made of plastic material or aluminium and is provided at a second end 2d with a shaped closure tip 6, monolithic with the reference rod 2.

The reference rod 2 presents preferably a circular shape, with an outer diameter, for example, equal to 400 mm, and a length which depends on the length of the support beam to which is fitted and which in any case shall be indicatively included in the values range of about 0,8ö3,5 meters.

The length of the first section 2a of the reference rod 2 immersed into the fluid mass varies depending on the applicative choices and requirements.

In this regard, the reference rod 2 can totally fit the support beam, till to be arranged close to the depth of the basin, or a portion more o less long of the beam itself, however plunging for a first stretch into the fluid mass.

Figures 1 and 2 show that the shaped tip 6 presents a substantially conical shape in order to facilitate the hooking of the rope during mooring.

Preferably but not necessarily, the floating bumper body 3 includes in this case a plurality of first rubber rings 5 which, in operative conditions, are supported by the hydrostatic thrust exerted by the fluid mass.

The first rings 5, for example made of plastic foam material, are coaxial and wrap the reference rod 2 which is inserted into each of them.

More in detail, the first rings 5 are stacked one on another in order to wrap the reference rod 2 for a first sector S₁ along the longitudinal axis Y, so as to cooperate with the lower part of the hull of the boat for deadening its blows against the anchor log 1 when it is moored.

The first lower rings 5 of the floating body 3 constantly interfere with the fluid mass at the water surface.

It is précised that the number of first rings which form the floating bumper body and the thickness of each of them may vary at will, thus also varying the width of the first sector, depending on the weight needs calculated on the basis of the fluid mass and the sizes of the reference rod.

According to the preferred embodiment here described of the invention, the support and/or protection anchor log 1 includes an additional bumper body, as a whole indicated with 7, externally associated with the reference rod 2 and operatively connected with the floating bumper body 3 by union means, as a whole signalled with 8.

The additional bumper body 7 deadens the blows against the anchor log 1 of the boat moored or docking at the port, while remaining at a prefixed distance from the water surface of the fluid mass A.

Similarly to the floating bumper body 3, the additional bumper body 7 includes a plurality of second rubber rings 9, coaxial to the first rings 5 and the reference rod 2 and wrapping a second sector S₂ of the latter so as to cooperate with the upper part of the hull of the boat in order to deaden the blows thereof against the anchor log 1.

As already said for the first rings, even the number of the second rings which form the additional bumper body and the thickness of each of them will vary depending on the applicative needs, thus also varying the width of the second sector.

As far as the union means 8 are concerned, they comprise:
- a first discoidal plate 10 arranged close to the upper edge 5a of one of the first rings 5 with respect to which presents, in this case, a smaller diameter;
- a second discoidal plate 11 arranged close to the lower edge 9b of one of the second rings 9 and spaced of a predefined length L from the first plate 10;
- a plurality of spacing bars 12 having the aforesaid predefined length L (e.g. 800 mm), parallel one to each other and to the longitudinal axis Y of the reference rod 2, uniformly distributed around the reference rod 2 between the floating bumper body 3 and the additional bumper body 7; the spacing bars 12 are equipped with ends fixed to the first plate 10 and the second plate 11.

Advantageously, the first rings 5 and the second rings 9 are made of fluorescent colour in order to make them better visible and facilitate the operations of boats docking at wharf during night or day darkness hours.

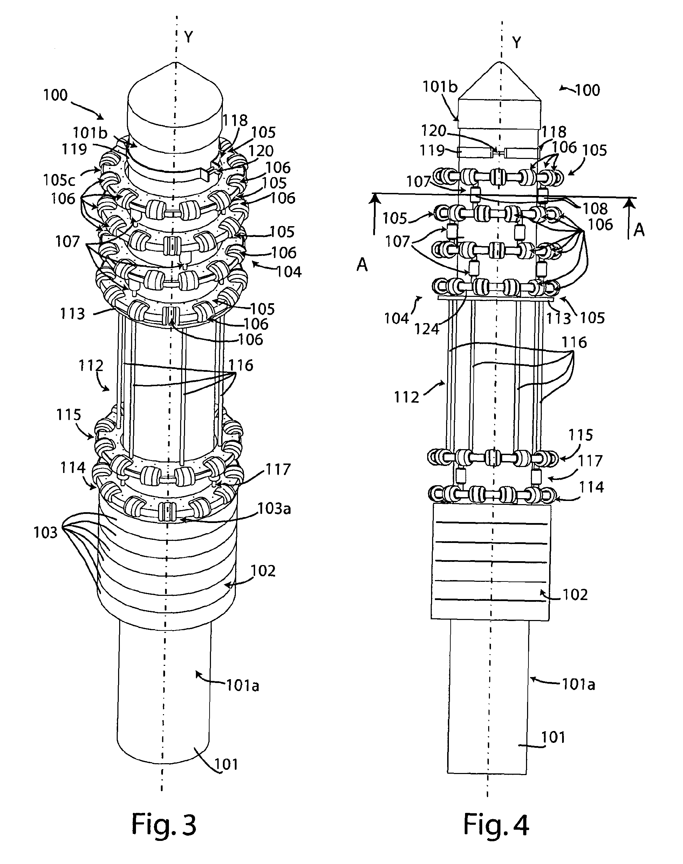

Figure 3 shows a first possible constructive variant of the invention in which the support and/or protection anchor log is globally numbered with 100.

The anchor log 100 differs from the anchor log 1 described above for the additional bumper body, overall indicated with 104, beyond to the other details of minor importance, which will be treated shortly.

In particular, the additional bumper body 104 includes a series of shaped discs 105, in this case in number of four, coaxial to the reference rod 101 which they wrap at a second sector, not indicated.

Each of these shaped discs 105 is provided with a plurality of sliding bodies 106 adapted to cooperate by contact with the hull of the boat in order to protect it from blows during the docking at the pier or quay and/or while it is already moored.

Specifically, the shaped discs 105 are facing and spaced apart each other along the longitudinal axis Y, two by two connected one with each other by rolling means, wholly indicated with 107 and clearly visible in figure 4, which allow the rotation of the shaped discs 105 around the longitudinal axis Y itself of the reference rod 101.

In other embodiments of the anchor log of the invention, not represented in the appended drawings, the additional bumper body may include a number of shaped discs which differs from that one just indicated and depends on the applicative requirements.

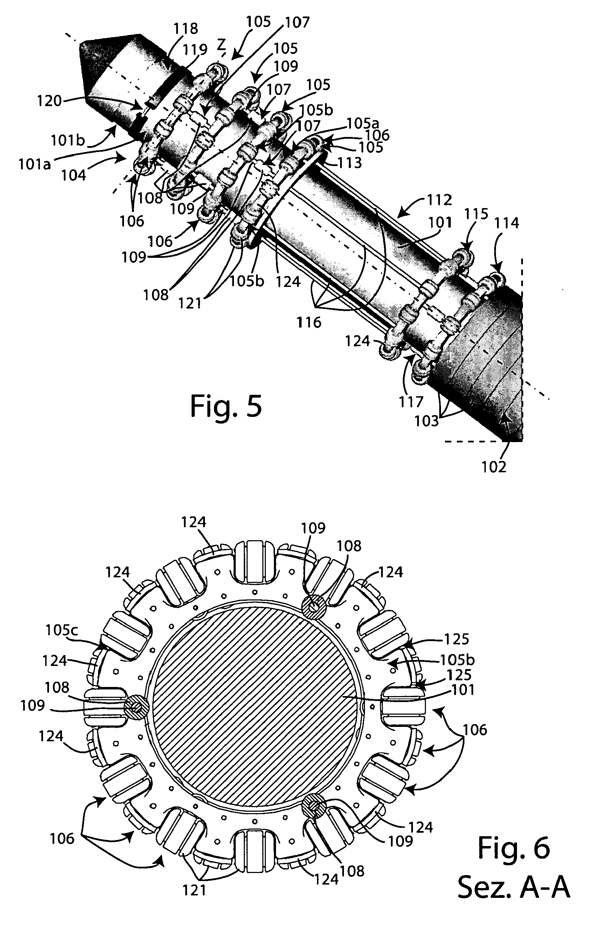

Figures 5 and 6 highlight that, in preferred but not exclusive way, the rolling means 107 comprise:
- a plurality of idle rollers 108, each defining a linear axis of rotation Y' parallel to the longitudinal axis Y of the reference rod 101, said idle rollers 108 being uniformly distributed around the rod 101 on whose outer wall 101 a slide;
- connection pins 109, each of which inserted into an axial through hole 110 made in each of the idle rollers 108 from which protrudes for one end 109a fixed to the upper face 105a of one the shaped discs and for the opposite end 109b fixed to the lower face 105b of another of the shaped discs 105 directly facing the previous one.

In particular, in the case in exam, the rolling means 107 comprise three idle rollers 108 and three respective connection pins 109 for each pair of shaped discs 105 facing and adjacent each other, to be reciprocally linked, as it can be observed in figure 6.

The axes of rotation Y' of the idle rollers 108 lie on an imaginary circle described around the reference rod 101, separated one from another by a constant arc of 120°: the idle rollers 108 are so arranged according to the vertexes of an equilateral triangle.

Each idle roller 108 and each connection pin 109 are made preferably in synthetic polymeric material, such as polyamide (also known under the trademark of nylon®).

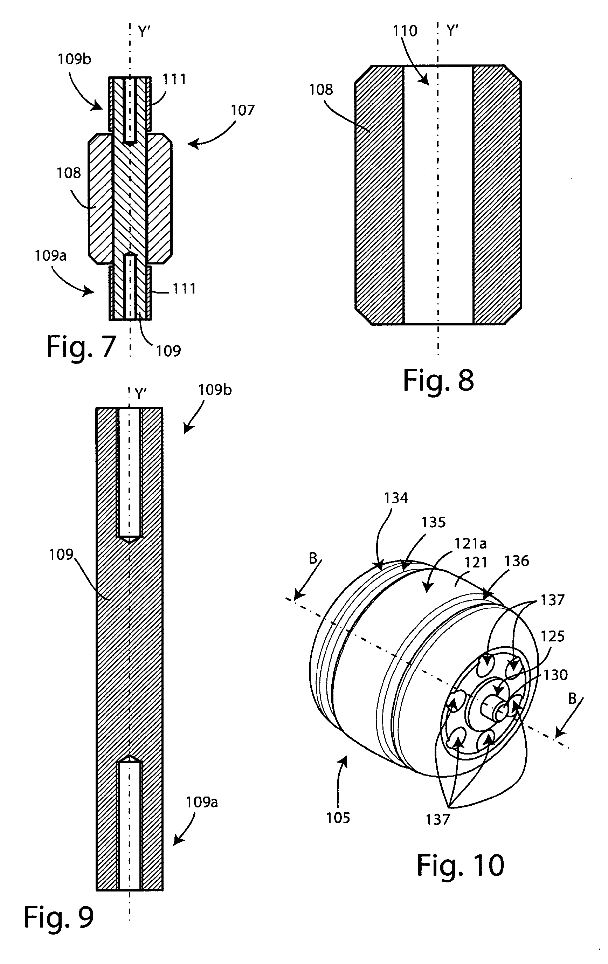

The constructive form of each rolling means 107 is illustrated with even greater detail in figure 7, while its component elements, such as the idle roller 108 and the connection pin 109, are depicted apart in the subsequent figures 8 and 9.

It can be noted that the rolling means 107 comprise, also, cylindrical spacers 111, externally and coaxially coupled with the protruding ends 109a, 109b of each of the connection pins 109.

It is understood that in other embodiments of the invention, not shown, the number of idle rollers and relative connection pins could be different from that one described above: in particular, the number of these elements of the rolling means depends on the surface roughness of the material and/or the sizes (especially the diameter) of the support beam to which the anchor log of the invention is in use preferably intended.

As it is observed again in figures 3-5, the union means, on the whole indicate with 112 and used to connect the additional bumper body 104 with the floating bumper body 102, in this case comprise:
- a discoidal plate 113 arranged close to the lower face 105b of a shaped disc 105;
- a pair of auxiliary shaped discs 114, 115, facing and separated each other and equal to the shaped discs 105, the first one of which arranged close to the upper edge 103a of the first ring 103 and the second one of which facing the discoidal plate 113 from which is spaced apart of a predetermined length;
- a plurality of spacing bars 116 having the aforesaid predetermined length (for example 800 mm), parallel one to each other and to the longitudinal axis Y of the reference rod 101, uniformly distributed around the rod 101 between the floating bumper body 102 and the additional bumper body 104, equipped with ends fixed to the discoidal plate 113 and the auxiliary shaped disc 115 respectively.

The auxiliary shaped discs 114, 115 are made integral each other by rolling means, indicated overall with 118, fully equivalent in structure to the rolling means 107 which join the shaped discs 105 to the additional bumpers body 104.

Again figures 3-5 show that the support and/or protection anchor log 100 of the invention includes hooking means, as a whole numbered with 118, placed at the second end 101 b of the reference rod 101, suitable to assure a stable grip to the mooring rope of the boats.

Preferably but not necessarily, the hooking means 118 comprise a laminar collar 119, placed close to the outer wall 101 a and provided with ends projecting outwardly, reciprocally connected by clamping means, overall indicated with 120, which define the area where the aforesaid mooring rope is wrapped.

As far as the sliding bodies 106 first introduced are concerned, they are uniformly distributed, one equidistant to the other, on the perimetric edge 105c of each of the shaped discs 105 from which protrude for at least a first section, not indicated but clearly visible in figure 6.

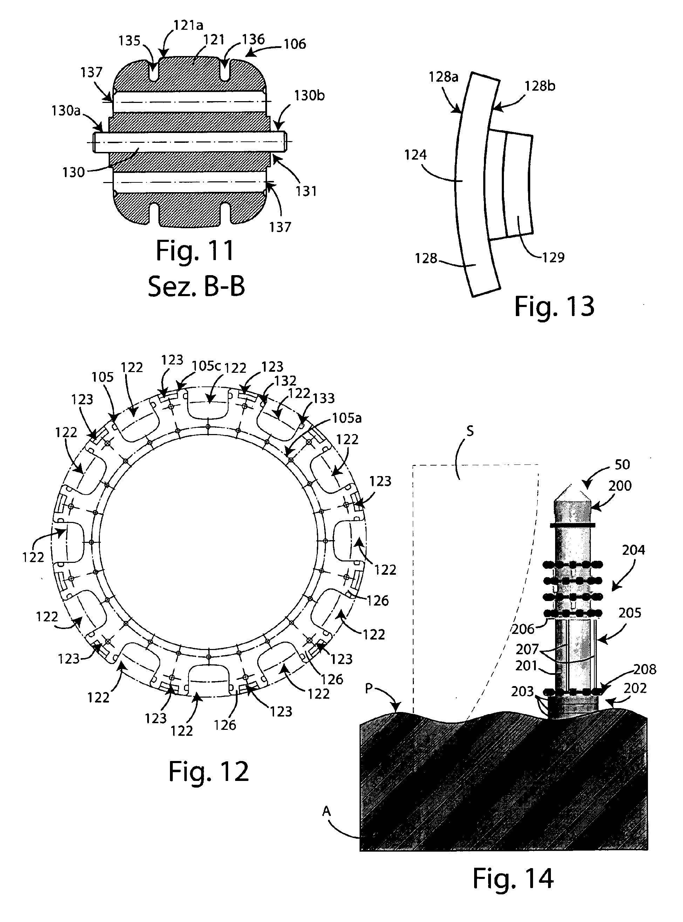

Each of these sliding bodies 106 is composed of a revolving roll 121, visible apart in figures 10 and 11, made of blows resistant polymeric material and selected from the group consisting of nylon, polyoxymethylene, polyethylene and the like.

The revolving roll 121 defines a transverse axis of rotation Z and is coupled with the relative shaped disc 105 by constraint means, on the whole indicated with 125 in figure 6.

Each of the shaped discs 105, shown in plan view in figure 12, presents along the perimetric edge 105c a plurality of radial recesses 122 in each of which a revolving roll 121 is housed for a second section, not shown.

Along the perimetric edge 105c, each shaped disc 105 also presents a series of peripheral seats 123, alternate with the radial recesses 122, in each of which a radial shock absorber 124, shown enlarged in figure 13, is housed.

Therefore, by virtue of these constructive features, the number of the revolving rolls 121 is equal to the number of radial recesses 122.

More generally, in the various embodiments of the anchor log of the invention, the number of revolving rolls will however be equal to the number of radial recesses obtained in the shaped discs.

Preferably, each of the shaped discs 105 presents a profile substantially in the shape of a centrally punched star, provided with a series of shaped protrusions 126 projecting from an inner rim 127 and having arched outer surfaces in each of which one of the aforesaid peripheral seats 123 is made.

In addition, the shaped protrusions 126 are spaced apart each other by the radial recesses 122.

In turn, each of the radial recesses 122 presents a substantially U-shaped profile.

In figure 13 it is observed that the radial shock absorber 124, a kind of bumper made of rubber, includes an outer cap 128 having a convex outer wall 128a and a concave inner wall 128b protruding from the perimetric edge 105c of the shaped disc 105.

The radial shock absorber 124 also includes a central baffle 129, protruding from the inner wall 128b of the outer cap 128 and inserted into the peripheral seat 123 of the shaped disc 105.

The constraint means 125 with which the revolving roll 121 is coupled with the relative shaped disc 105 comprise a pin 130 inserted into an axial through opening 131 made in the revolving roll 121.

The ends 130a, 130b of the pin 130 are housed in inner notches 132, 133 made in the opposite side walls bounding each of the radial recesses 122.

Advantageously, the revolving roll 121 presents on the side surface 121 a slipping means, totally indicated with 134, which favour the rolling friction between the revolving roll 121 itself and the hull of the boat with which it comes into contact.

In essence, the slipping means 134 increase the rolling ability of the revolving roll 121, in itself already high thanks to the type of material of which the latter is made, limiting the risks that it slides and so damages the hull of the boat moored or under manoeuvring for docking at the pier or wharf.

The presence of the slipping means 134 facilitates, for example, the release from the revolving roll 121 of extraneous bodies, such as algae, which otherwise may firmly adhere to its side surface 121 a limiting the rotation.

In this case, for example, the slipping means 134 comprise two annular grooves 135, 136 which, in other embodiments of the anchor log of the invention, not shown, may be in different number or replaced by one or more knurled areas or similar means.

Each revolving roll 121 also presents a plurality of lightening through holes 137 which develop parallely to the rotation axis Z and are arranged uniformly around the axial opening 131.

Integral part of the present invention is also a generic load bearing structure for the mooring of boats, illustrated in figure 14 where it is globally numbered with 50.

The load bearing structure 50 comprises a support beam, not visible, suitable to be partially immersed into a fluid mass A, for example, sea water, and anchored at one end to the depth of the basin containing the fluid mass A.

In accordance with the invention, the load bearing structure 50 includes a support and/or protection anchor log, wholly indicated with 200, in the essential features equal to the anchor log 1 and 100 yet described, since it includes:
- a reference rod 201 defining a longitudinal axis Y, encompassed on the support beam and provided with a first section, immersed into the fluid mass A, and a second section which emerges from the water surface P of the fluid mass A itself;
- a floating bumper body 202, externally associated with the reference rod 201, suitable to deaden the blows of the hull S of the boat remaining on the water surface P of the fluid mass A constantly following the level of the latter.

The support beam has typically a circular shape and is made of wood, concrete or metal, materials having high mechanical and corrosion strength in aqueous or wet environment.

The support and/or protection anchor log of figure 14 differs from the anchor logs already described, in particular from the anchor log 100, for the union means, on the whole numbered with 205, by means of which the additional bumper body 204 is connected with the floating bumper body 202.

Indeed, the union means 205 include, beyond to the discoidal plate 206 and the plurality of spacing bars 207, one single auxiliary shaped disc 208 disposed close to the upper edge of a first ring 203 of the floating bumper body 202.

Operatively, the support and/or protection anchor log 1 of the invention is typically coupled with a support beam, almost always already in place, that is anchored to the depth of the water mass A.

The coupling of the anchor log 1 with the support beam occurs by fitting or encompassing the reference rod 2 to the beam itself till the point in which the free end of the latter interferes with the shaped tip 6.

Subsequently, the floating bumper body 3 is externally and coaxially fitted to the reference rod 2, placing the first lower rings 5 in contact with the water surface P of the aqueous mass A.

The operations proceed by fitting around the reference rod 2 the first discoidal plate 10 up to position it close to the upper edge 5a of one of the first rings 5, coupling the spacing bars 12 with this plate 10, fitting even the second discoidal plate 11 externally to the reference rod 2 and coupling it with the spacing bars 12.

Finally, the additional bumper body 7 is fitted on the reference rod 2 till the point in which the lower edge 9b of one the second rings 9 touches the second discoidal plate 11, getting the load bearing structure, also object of the present invention.

The load bearing structure and the anchor log 1 are so ready to lock the mooring rope of the boat by the hooking means, not shown in figures 1 and 2.

It seems clear that the anchor log 1 of the invention simplifies compared to the current state of the art the operations to be performed to provide a support beam already immersed into water with means of protection from uncontrolled blows suffered by boats when already moored at a port or a pier.

During mooring, the anchor log 1 effectively deadens the inevitable blows, produced by the wave-motion of the aqueous mass A and suffered by the hull of the boat, reducing the risks of structural damage compared to the known art.

Moreover, thanks to the bumper bodies 3 and 7, the anchor log 1 is also useful during the manoeuvre of the boat for docking at the port, which usually occurs going reverse, that is by aft, since it allows the driver to perform such manoeuvres, rather ticklish in such cases, more quiet and quicker than the known art.

The floating bumper body 3 allows the anchor log 1 to follow the motion of the tide of the aqueous mass A: the entire front of the boat hull S is in this way constantly protected in presence of its inevitable accidental blows against the anchor log 1, both when it is moored and under manoeuvre for docking at the pier, quay or wharf of a port.

The aesthetic effect achieved by the anchor log 1 and given by it to the load bearing structures already in place, especially when there are no boats moored, is certainly better than that one offered by similar known protection and/or support systems.

Furthermore, contrary to prior art, the anchor log 1 keeps longer unaltered over time its own aesthetic effect under the continuous use to which it is intended (support of the mooring rope and boat protection from the blows against the anchor log).

What just said is valid and applicable even for the anchor logs 100 and 200 provided, however, of constructive features which increase the degree of boat protection from accidental blows against them.

Considering the anchor log 100, this is due to the smooth outer surface of the revolving roll 121, its rotation around the axis Z and still the rotation the shaped discs 105 around the main axis Y of the reference rod 101.

Furthermore, the sliding bodies 106 facilitate the release of the members in mutual contact minimizing the slipping of the hull of the boat on the anchor log 100.

The moving boat, not only if bound by mean of mooring ropes to the hooking means 118 but also during docking at the port, is thus protected from the adverse effects resulting from impact against the anchor log 100, 200 and occupies the space intended to it for the mooring easily and, at the same time, without risks of serious or irreversible damages.

The manoeuvring of the boat by the driver during port pier or quay docking, results, therefore, easier and requires less time to be effectively completed.

By virtue of the foregoing, it is understood that the support and/or protection anchor log for the mooring of boats, object of the current invention, achieves the purposes and reaches the advantages previously mentioned.

In executing phase, changes could be made to the support and/or protection anchor log of the invention, for example consisting of a floating bumper body different from that one described above.

Beyond this, there will be other embodiments of the invention in which the anchor log comprises a reference rod having a different shape from that one shown in the drawings which follow, which does not affect the advantage brought by this invention.

Even the additional bumper body may present different composition from those ones already discussed above, depending on the specific design choices.

Furthermore, the anchor log of the invention may include detection means, for example, position sensors, which in case of need signal the driver the blow against it by the moving boat.

With appropriate sizing, the anchor log of the invention may also be used independently from the support beam.

Finally, the anchor log of the invention will fit support beams already anchored in any basin containing a fluid mass, such as a lake, a river and so on.

It is, finally, clear that numerous other variations may be made to the anchor log in question, without for this reason going out of the novelty principles inherent to the inventive idea, as it is clear that, in the practical implementation of the invention, materials, shapes and sizes of the details illustrated can be any, depending on the needed, and may be replaced with others technically equivalent.

## Claims

1. Support and/or protection anchor log (1; 100; 200) for the mooring of boats **characterized in that** it comprises:
- a reference rod (2; 101; 201), defining a longitudinal axis (Y), provided with a first section (2a) suitable to be immersed into a fluid mass (A) and with a second section (2b) suitable to emerge from the water surface (P) of said fluid mass (A);
- a floating bumper body (3; 102; 202), externally associated with said reference rod (2; 101; 201), suitable to deaden the blows of said boat remaining on said water surface (P) of said fluid mass (A) constantly following the level of said fluid mass (A).

2. Anchor log (1; 100; 200) as claim 1) **characterized in that** said reference rod (2; 101; 201) is hollow inside and has at a first end (2c) an inlet (4) suitable to allow the introduction in said reference rod (2; 101; 201) of a support beam anchored to the depth of the basin containing said fluid mass (A) so that said reference rod (2; 101; 201) encompasses said support beam.

3. Anchor log (1; 100; 200) as claim 1) or 2) **characterized in that** said floating bumper body (3; 102; 202) includes one or more first rings (5; 103; 203), in operating conditions suitable to be supported by the hydrostatic thrust exerted by said fluid mass (A), coaxial to said reference rod (2; 101; 201) inserted into each of said first rings (5; 103; 203).

4. Anchor log (1; 100; 200) as claim 3) **characterized in that** said first rings (5; 103; 203) are stacked one on another in order to wrap said reference rod (2; 101; 201) for a first sector (S₁) along said longitudinal axis (Y) so as to cooperate with the lower part of the hull (S) of said boat for deadening the suffered blows thereof, the first lower rings (5; 103; 203) interfering with said fluid mass (A) at said water surface (P).

5. Anchor log (1; 100; 200) as any of the previous claims **characterized in that** it includes an additional bumper body (7; 104; 204), externally associated with said reference rod (2; 101; 201) and operatively connected with said floating bumper body (3; 102; 202) by union means (8; 112; 205) suitable to deaden the blows of said moored boat while remaining at a prefixed distance from said water surface (P) of said fluid mass (A).

6. Anchor log (1) as claim 5) **characterized in that** said additional bumper body (7) comprises one or more second rings (9) coaxial to said first rings (5) and to said reference rod (2) and wrapping a second sector (S₂) of said reference rod (2), inserted into said second rings (9), so as to cooperate with the upper part of said hull (S) of said boat in order to deaden the suffered blows.

7. Anchor log (1) as claim 6) **characterized in that** said union means (8) include:
- a first discoidal plate (10) arranged close to the upper edge (5a) of one of said first rings (5);
- a second discoidal plate (11) arranged close to the lower edge (9b) of one of said second rings (9) and spaced apart of a predefined length (L) from said first plate (10);
- a plurality of spacing bars (12) having said predefined length (L), parallel one to each other and to said longitudinal axis (Y) of said reference rod (2), uniformly distributed around said reference rod (2) between said floating bumper body (3) and said additional bumper body (7), equipped with ends fixed to said first (10) and second plate (11).

8. Anchor log (100; 200) as claim 5) **characterized in that** said additional bumper body (104; 204) includes one or more shaped discs (105), coaxial to said reference rod (101; 201) which they wrap at a second sector, equipped with one or more sliding bodies (106) suitable to cooperate by contact with said hull (S) of said boat in order to protect it from accidental blows during the docking at pier or quay and/or while it is already moored.

9. Anchor log (100; 200) as claim 8) **characterized in that** said additional bumper body (104; 204) comprises a plurality of said shaped discs (105) facing and spaced one to another along said longitudinal axis (Y), at least two of which connected one with each other by rolling means (107) suitable to allow the rotation of said shaped discs (105) around said longitudinal axis (Y) of said reference rod (101; 201).

10. Anchor log (100; 200) as claim 9) **characterized in that** said rolling means (107) include:
- a plurality of idle rollers (108), each defining a linear axis of rotation (Y') parallel to said longitudinal axis (Y) of said reference rod (101; 201), uniformly distributed around said reference rod (101) on the outer wall (101 a) of which slide;
- connection pins (109), each of which inserted into an axial through hole (110) made in each of said idle rollers (108) from which protrudes for one end (109a) fixed to the upper face (105a) of one of said shaped discs (105) and for the opposite end (109b) fixed to the lower face (105b) of another of said shaped discs (105) facing the previous one.

11. Anchor log (100; 200) as any of the claims from 8) to 10) **characterized in that** said union means (112; 205) include:
- a discoidal plate (113; 206) arranged close to the lower face (105b) of one of said shaped discs (105);
- at least an auxiliary shaped disc (114, 115; 208), equal to said shaped discs (105), arranged close to the upper edge (103a) of one of said first rings (103; 203) and spaced apart of a predetermined length from said discoidal plate (113; 206);
- a plurality of spacing bars (116; 207) having said predetermined length, parallel one to each other and to said longitudinal axis (Y) of said reference rod (101; 201), uniformly distributed around said reference rod (101; 201) between said floating bumper body (102; 202) and said additional bumper body (104; 204), equipped with ends fixed to said discoidal plate (113; 206) and said auxiliary shaped disc (114).

12. Anchor log (100; 200) as any of the claims from 8) to 11) **characterized in that** said sliding bodies (106) are uniformly distributed, one equidistant to the other, on the perimetrical edge (105c) of each of said shaped discs (105) from which protrude for at least a first section, each of said sliding bodies (106) being composed of a revolving roll (121) made of polymeric material suitable to resist to the blows, defining a transverse axis of rotation (Z) and coupled with each of said shaped discs (105) by constraint means (125).

13. Anchor log (100; 200) as claim 12) **characterized in that** each of said shaped discs (105) presents along said perimetrical edge (1 05c):
- one or more radial recesses (122) in each of which a second section of said revolving roll (106) is housed;
- one or more peripheral seats (123), alternate with said radial recesses (122), each of which houses a radial shock absorber (124).

14. Anchor log (100; 200) as claim 12) or 13) **characterized in that** said constraint means (125) include a pin (130) inserted into an axial through opening (131) made in said revolving roll (121), the ends (130a, 130b) of said pin (130) being housed in inner notches (132, 133) made in opposite side walls bounding each of said radial recesses (122).

15. Anchor log (100; 200) as any of the claims 12), 13) or 14) **characterized in that** said revolving roll (121) presents on the side surface (121 a) slipping means (28) suitable to favour the rolling friction between said revolving roll (121) and said hull (S) of said boat with which it comes into contact.

16. Anchor log (1; 100; 200) as any of the previous claims **characterized in that** it includes hooking means (118), positioned at the second end (101 b) of said reference rod (2; 101; 201), suitable to firmly bind the mooring rope of said boat to said reference rod (2; 101; 201).

17. Load bearing structure (50) for the mooring of boats including at least one support beam suitable to be partially immersed into a fluid mass (A) and anchored at one end at the depth of the basin containing said fluid mass (A), **characterised in that** it includes a support and/or protection anchor log (1; 100; 200) which comprises:
- a reference rod (2; 101; 201) defining a longitudinal axis (Y), encompassed on said support beam and provided with a first section (2a), suitable to be immersed into said fluid mass (A), and with a second section (2b) suitable to emerge from the water surface (P) of said fluid mass (A);
- a floating bumper body (3; 102; 202), externally associated with said reference rod (2; 101; 201), suitable to deaden the blows of said boat remaining on said water surface (P) of said fluid mass (A) constantly following the level of said fluid mass (A).
